# EUROPÄISCHE PATENTSCHRIFT

(11) **EP 1 974 083 B1**
(45) Veröffentlichungstag und Bekanntmachung des Hinweises auf die Patenterteilung: **10.06.2009**
(21) Anmeldenummer: 06830360.1
(22) Anmeldetag: 05.12.2006
(51) Int. Cl.: D06F 37/04, D06F 58/04

(54) **WÄSCHETROMMEL**
LAUNDRY DRUM
TAMBOUR A LINGE

(30) Priorität: 28.12.2005 DE 102005062803; 06.03.2006 DE 102006010179
(43) Veröffentlichungstag der Anmeldung: 01.10.2008
(73) Patentinhaber: BSH Bosch und Siemens Hausgeräte GmbH, 81739 München (DE)
(72) Erfinder: GEYER, Johannes, 85540 Haar (DE); RATFISCH, Uwe, 14193 Berlin (DE); SOMMER, Stephan, 14612 Falkensee (DE); WILDUNG, Wilfried, 14169 Berlin (DE)
(86) Internationale Anmeldenummer: PCT/EP2006/069310
(87) Internationale Veröffentlichungsnummer: WO 2007/077075

(56) Entgegenhaltungen:
- WO-A-98/20195
- WO-A-03/054275
- DE-A1- 19 603 710
- DE-A1- 19 951 743

## Beschreibung

Die Erfindung betrifft eine Wäschetrommel für eine Wäschebehandlungsmaschine, die innerhalb eines Gehäuses um eine nicht in Schwerkraftrichtung orientierte Achse drehbar gelagert ist und einen derart gebogenen und mit Prägungen versehenen Trommelmantel aufweist, dass wenigstens eine rechtwinklig zur Drehachse stehende Schnittebene der Wäschetrommel eine wenigstens annähernde Kreisform aufweist.

Eine derartige Wäschetrommel ist aus der WO 98/20195 bekannt. Ihre Prägungen weisen eine Konturfläche in Form eins regelmäßigen Vielecks auf, beispielsweise eines regelmäßigen Sechsecks. Dabei stoßen die Seitenkanten dieser Konturflächen aneinander, und in den gemeinsamen Ecken der Konturflächen sind kleine, in der Flucht des Trommelmantels liegende Flächen vorgesehen, in die einzig und allein Flutlöcher geschnitten sind. Diese Maßnahmen sollen angeblich die Wäsche einerseits intensiver mechanisch behandeln, andererseits zur größeren Wäscheschonung beitragen. Die erheblich geringere Anzahl und der ebenfalls geringere Einzelquerschnitt der Flutlöcher vermindern die Gesamtflutlochfläche eines derartigen Trommelmantels, so dass der Flüssigkeitsaustausch zwischen dem Innen- und dem Außenraum einer solchen Wäschetrommel ersichtlich erheblich gemindert ist. Dadurch wird die Wasch- und die Spülwirkung beeinträchtigt, weil die Laugendurchflutung sinkt.

Weitere Ausführungen von symmetrischen Wölbstrukturen sind in der WO 03/054275 A1 offenbart, wobei die Ränder der Wölbstrukturen im Wesentlichen kreis- oder ellipsenförmig oder oval ausgebildet sein können.

Die DE 199 51 743 A1 offenbart trichterförmige Wölbstrukturen mit außermittig angeordneten Durchflutungslöchem.

DE 196 03 710 A1 offenbart Wäschetrommeln mit Prägungen in zwei unterschiedlichen Größen.

Der Erfindung liegt die Aufgabe zugrunde, eine eingangs definierte Wäschetrommel so auszubilden, dass bei tatsächlich intensiverer mechanischer Behandlung der Wäsche die Durchflutungsleistung des Trommelmantels zu steigern, ohne eine Verminderung der Wäscheschonung hinnehmen zu müssen.

Die Lösung dieser Aufgabe gelingt erfindungsgemäß dadurch, dass der Trommelmantel mit gewölbten Prägungen versehen ist, deren in der Flucht des Trommelmantels liegende Kontur eine Fläche mit mehreren, stetig ineinander übergehenden, bogenförmigen Grenzen bildet und nur eine einzige Symmetrieachse aufweist, die wenigstens annähernd in Umfangsrichtung des Trommelmantels verläuft. Durch diese Gestaltung des Trommelmantels entstehen an den Prägungskonturen keine Ecken, die aneinander stoßen und in denen störende Flutlöcher sitzen. Weiter werden die stetig bogenförmig umgrenzten Konturflächen zu einer schonenderen Wäschebehandlung führen. Dies kommt am stärksten in der gemäß Anspruch 2 vorgenommenen Stellung der Prägungen nach innen zur Geltung.

Gemäß einer vorteilhaften Weiterbildung der Erfindung (Anspruch 3) bildet die Kontur jeder Prägung eine tropfenförmige Fläche. Die in Umfangsrichtung des Trommelmantels verlaufenden Symmetrieachsen strecken solchermaßen geformte Prägungen in Bewegungsrichtung der Trommel, so dass eine an den Prägungen entlang fließende Strömung den Austausch der Flotte in einer Waschmaschine von innen nach außen und zurück durch die Flutlöcher hindurch unterstützt, wenn diese Prägungen gemäß Anspruch 6 derart weitergebildet sind, dass in einem möglichst steil gegen den Trommelmantel stehenden Teil der Wölbungsfläche jeder Prägung Flutlöcher angeordnet sind.

Diese Weiterbildung ergibt aber auch einen ähnlich guten Effekt, wenn gemäß Anspruch 4 die Kontur jeder Prägung eine muschelförmige Fläche oder gemäß Anspruch 5 eine sichelförmige Fläche bildet.

Die gute Durchflutung kann aber noch gesteigert werden, wenn die Erfindung gemäß Anspruch 7 weitergebildet ist und die Mantelfläche zwischen den Prägungen Flutlöcher aufweist.

Alle in den Unteransprüchen beschriebenen Merkmale der Weiterbildungen der Erfindung sind miteinander und mit den Merkmalen des Anspruches 1 verwendbar.

Anhand von in der Zeichnung dargestellten Ausführungsbeispielen ist die Erfindung nachstehend näher erläutert. In der Zeichnung zeigen
- Fig. 1: eine Wäschebehandlungsmaschine mit einer horizontal gelagerten Wäschetrommel entlang einer rechtwinklig zur Drehachse verlau- fenden Ebene geschnitten,
- Fig. 2: ein in der Schnittebene gemäß Einzelheit II in Fig. 1 vergrößert dar- gestellter Abschnitt eines Trommelmantels mit nach innen gewölb- ten Prägungen,
- Fig. 3: ein Trommelmantelabschnitt entsprechend Einzelheit III in Fig. 2 mit einer nach außen gewölbten Prägung,
- Fig. 4: eine Ansicht von innen auf den Trommelmantelabschnitt gemäß Fig. 2 mit einer Prägung in Tropfenform,
- Fig. 5: eine Ansicht entsprechend Fig. 4 mit zusätzlich angebrachten Flut- löchern,
- Fig. 6: eine Ansicht von Innern auf den Trommelmantelabschnitt gemäß Fig. 2 mit einer Prägung in Muschelform,
- Fig. 7: eine Ansicht entsprechend Fig. 6 mit zusätzlich angebrachten Flut- löchern und
- Fig. 8: eine Ansicht von Innen auf eine Prägung in Sichelform im Trom- melmantelabschnitt gemäß Fig. 2.

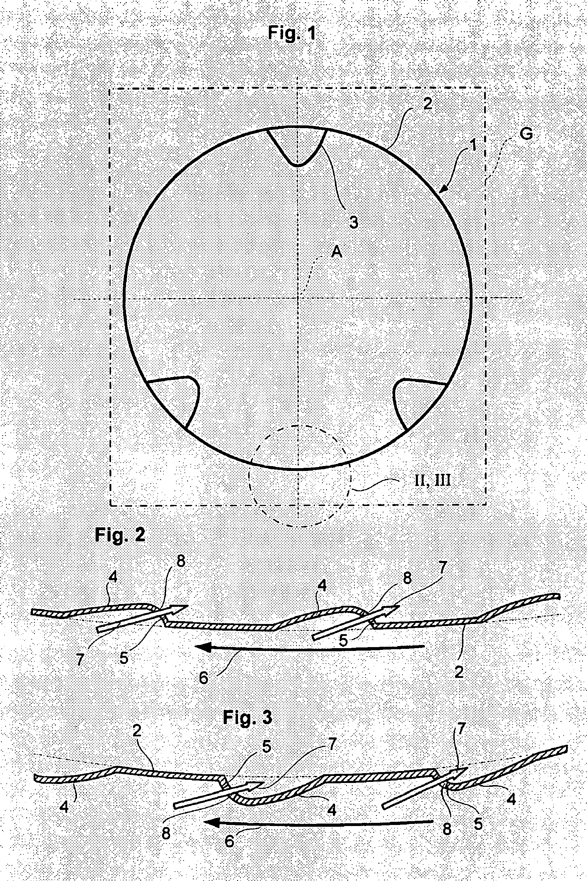

Die im Querschnitt in Fig. 1 dargestellte Wäschetrommel 1 hat einen sie umgrenzenden Trommelmantel 2 und am Innenumfang angeordnete Wäschemitnehmer 3. Sie ist innerhalb eines Gehäuses G um eine wenigstens annähernd waagerechte Achse A drehbar gelagert und bildet zusammen mit dem Gehäuse G und gegebenenfalls zusammen mit einem nicht dargestellten, sie umgebenden Laugenbehälter eine Wäschebehandlungsmaschine. Diese kann eine Trommelwaschmaschine oder ein Trommeltrockner sein. Auf der Trommelmantelfläche 2 sind Prägungen angebracht, die im Einzelnen anhand der Figuren 2 bis 8 näher erläutert werden. Dazu sind Varianten für Prägungen im Trommelmantel anhand von in Fig. 2 und 3 vergrößert wiedergegebenen Schnitten der Einzelheit II bzw. III in Fig. 1 dargestellt.

Beim in Fig. 2 dargestellten Trommelmantel 2 sind die Prägungen 4 in den Innenraum der Trommel hinein gewölbt. An einem steil gegen den Trommelmantel 2 stehenden Teil 5 der Prägungen 4 sind Flutlöcher 8 angebracht, durch die bei angegebener Drehrichtung 6 Lauge auf dem durch die Pfeile 7 beschriebenen Weg von außen in die Trommel 1 eindringt. Die flach gegen den Trommelmantel 2 abfallenden Teile der Prägungen 4 dienen der möglichst laminaren Führung der Lauge am Trommelmantel 2 in Richtung auf die im steilen Teil 5 angeordneten Flutlöcher 8. dann entsteht vor den Löchern ein größtmöglicher Strömungsdruck, der einen erheblichen Anteil der Lauge durch die Löcher zwingt und dadurch die Durchflutung der in der Wäschetrommel liegenden Wäsche verbessert. Außerdem ist durch die unterschiedlich steilen Flanken 5 und 10 der in die Wäschetrommel 1 ragenden Prägungen 4 mit einem angepassten Drehrhythmus der Wäschetrommel in jeweiliger Links- bzw. Rechtsdrehrichtung eine Steuerung des mechanischen Eintrags auf die Wäsche bei ihrer Bearbeitung möglich.

Im Gegensatz dazu sind die Prägungen 4 in den Trommelmantel 2 der Fig. 3 nach außen gerichtet und haben ebenfalls steile Teile 5 der Wölbungsfläche, die bei der angegebenen Drehrichtung 6 gegen die von außen wirkende Laugenströmung 7 gerichtet sind. Dadurch wird die Lauge durch die Flutlöcher 8 hindurch treten und auf die Innenseite der Wäschetrommel 1 gelangen. Durch Anordnungen gemäß Fig. 2 oder 3 kann eine bedeutende Laugenströmung erzeugt werden, die zur guten Durchflutung der in der Trommel liegenden Wäsche erforderlich ist.

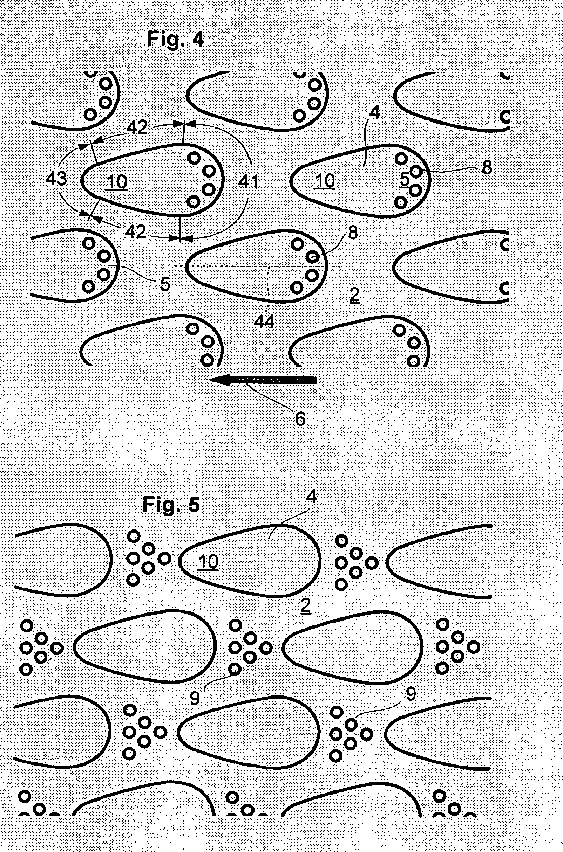

Bei Aufsicht auf die Innenseite des Trommelmantels 2 ergibt sich für unterschiedliche Varianten der Ausbildung von Prägungen 4 und Flutlöchern 8 bzw. 9 jeweils ein Bild gemäß Fig. 4 bis 7 bzw. 8.

Ein Trommelmantel 2 gemäß der Erfindung kann beispielsweise entsprechend Fig. 4 geprägt sein, in der tropfenförmige Prägungen 4 beschrieben werden. In den steilen Teilen 5 der Wölbungsflächen der Prägungen 4 sind entsprechend Fig. 2 bzw. 3 Flutlöcher angebracht, so dass bei voraussetzungsgemäß aus der Zeichnungsebene empor ragenden Prägungen 4 der Trommelmantel 2 sich in Richtung der schmalen Teile 10 der Prägungen, nämlich in Pfeilrichtung 6, zu bewegen hat, damit die Lauge von außen in den Trommelinnenraum eindringen kann.

Anstelle der oder zusätzlich zu den Flutlöchern 8 können gemäß Fig. 5 auch in den flachen Abschnitten des Trommelmantels 2 zwischen den Prägungen 4 Flutlöcher 9 angebracht sein. Hier dringt Lauge von außen dadurch ein, dass die durch die Lauge in einem die Trommel umgebenden Laugenbehälter gezogenen Prägungen 4 zu einer wellenförmigen Druckbildung führen, deren Druckspitzen auf die Flutlöcher 9 treffen. Im übrigen dienen diese Flutlöcher an sich, wie bei einer üblichen Wäschetrommel, natürlich dem Laugenaustausch von innen nach außen und retour.

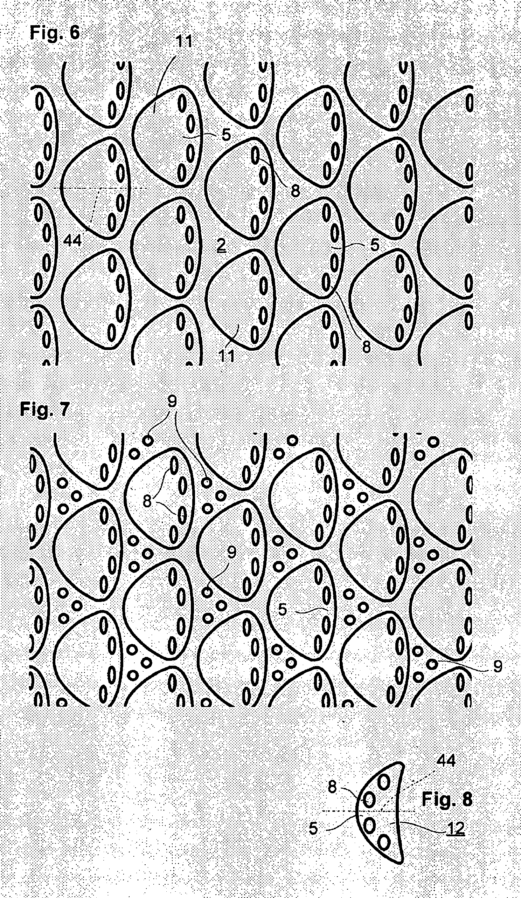

In Fig. 6 und 7 sind entsprechende Anordnungen wie in Fig. 4 und 5 mittels muschelförmiger Prägungen 11 getroffen. Auch hier sind in den steilen Teilen 5 der Prägungen 11 Flutlöcher 8 angeordnet, die bei entsprechender Drehrichtung der Trommel, entsprechend Pfeilrichtung 6 in Fig. 4, zu einer Einströmung von Lauge in die Wäschetrommel führen, wie dies für die Prägungen gemäß Fig. 2 beschrieben ist. Zusätzliche Flutlöcher 9 können gemäß Fig. 7 natürlich ebenfalls angebracht werden.

Andeutungsweise ist in Fig. 8 noch eine weitere Form für Prägungen 12 vorgestellt. Diese Form gleicht bzw. ähnelt einer Sichel, die ebenfalls zu einer ungleichförmigen Wölbung der Prägung 12 führt und einen steilen Teil 5 hat, in dem Flutlöcher 8 angeordnet sein können. Im übrigen ist auch eine solchermaßen geformte Prägung 12 im gleichen Sinne verwendbar und anzuordnen wie die anderen dargestellten Formen für die Prägungen 4 und 11.

Die dargestellten Ausführungsbeispiele stellen keine endliche Zahl von Varianten dar. Unter den Merkmalen des Anspruches 1 sind auch andere Formen von Prägungen denkbar, die hier nicht unmittelbar angesprochen sind. Außerdem können auch unterschiedliche Formen miteinander gemischt werden. Es sind sogar Varianten denkbar, bei denen die Prägungen entsprechend der Erfindung oder ihrer Weiterbildungen mit Prägungen gemischt sind, die im Stand der Technik zu finden sind.

Eine erfindungsgemäße Wäschetrommel verbessert nicht nur die Wäschebehandlung, wie eingangs schon beschrieben wurde. Sie ist auch stabiler als eine Wäschetrommel ohne Prägungen. Darüber hinaus neigt ein gemäß der Erfindung geprägter Trommelmantel weniger leicht zu membranartigen Schwingungen, so dass sie gegenüber ungeprägten Wäschetrommeln akustische Vorteile aufweist. Im Übrigen wird darauf verwiesen, dass eine Wäschebehandlungsmaschine auch ein Wäschetrockner sein kann, bei dem, falls nicht zur Luftzirkulation erforderlich, auf entsprechende Löcher in oder neben den Prägungen wie die Flutlöcher in der Waschmaschinen-Wäschetrommel gänzlich verzichtet werden kann.

## Patentansprüche

1. Wäschetrommel (1) für eine Wäschebehandlungsmaschine, die innerhalb eines Gehäuses (G) um eine nicht in Schwerkraftrichtung orientierte Achse (A) drehbar gelagert ist und einen derart gebogenen und mit gewölbten Prägungen (4, 11, 12) versehenen Trommelmantel (2) aufweist, dass wenigstens eine rechtwinklig zur Drehachse (A) stehende Schnittebene der Wäschetrommel (1) eine wenigstens annähernde Kreisform aufweist, **dadurch gekennzeichnet, dass** die gewölbten Prägungen (4, 11, 12) eine in der Flucht des Trommelmantels (2) liegende Kontur aufweisen, die eine Fläche mit mehreren, stetig ineinander übergehenden, bogenförmigen Grenzen (41 bis 43) bildet und nur eine einzige Symmetrieachse (44) aufweist, die in Umfangsrichtung des Trommelmantels (2) verläuft.

2. Wäschetrommel nach Anspruch 1, **dadurch gekennzeichnet, dass** die Prägung (4, 11, 12) in Bezug auf die Drehachse (A) nach innen gewölbt ist.

3. Wäschetrommel nach Anspruch 1, **dadurch gekennzeichnet, dass** die Kontur jeder Prägung (4) eine tropfenförmige Wölbungsfläche bildet.

4. Wäschetrommel nach Anspruch 1, **dadurch gekennzeichnet, dass** die Kontur jeder Prägung (11) eine muschelförmige Wölbungsfläche bildet.

5. Wäschetrommel nach Anspruch 1, **dadurch gekennzeichnet, dass** die Kontur jeder Prägung (12) eine sichelförmige Wölbungsfläche bildet.

6. Wäschetrommel nach Anspruch 1, **dadurch gekennzeichnet, dass** die Wölbungsfläche jeder Prägung (4, 11, 12) in einem Schnitt entlang ihrer Symmetrieachse (44) betrachtet einen möglichst steil gegen den Trommelmantel (2) ansteigenden Teil (5) und einen flach gegen den Trommelmantel (2) abfallenden Teil (10) aufweist.

7. Wäschetrommel nach Anspruch 1 für eine Wäschebehandlungsmaschine, in der die Wäsche einem Nassprozess unterworfen werden kann, **dadurch gekennzeichnet, dass** in dem steil gegen den Trommelmantel (2) ansteigenden Teil (5) der Wölbungsfläche jeder Prägung (4, 11, 12) Flutlöcher (8) angeordnet sind.

8. Wäschetrommel nach Anspruch 1, **dadurch gekennzeichnet, dass** die Mantelfläche (2) zwischen den Prägungen (4, 11, 12) Flutlöcher (9) aufweist.

## Claims

1. Laundry drum (1) for a laundry treatment machine, which is mounted to be rotatable within a housing (G) about an axis (A) not oriented in the direction of gravitational force and which comprises a drum casing (2) which is bent, and provided with arched stamped portions (4, 11, 12), in such a manner that at least one sectional plane, which is at right angles to the axis (A) of rotation, of the laundry drum (1) has an at least approximately circular form, **characterised in that** the arched stamped portions (4, 11, 12) have a contour which lies in alignment with the drum casing (2) and which forms a surface with several curved boundaries (41 to 43), which progressively merge into one another, and only a single axis (44) of symmetry, which extends in circumferential direction of the drum casing (2).

2. Laundry drum according to claim 1, **characterised in that** the stamped portions (4, 11, 12) are arched inwardly with respect to the axis (A) of rotation.

3. Laundry drum according to claim 1, **characterised in that** the contour of each stamped portion (4) forms a drop-shaped arched surface.

4. Laundry drum according to claim 1, **characterised in that** the contour of each stamped portion (11) forms a mussel-shaped arched surface.

5. Laundry drum according to claim 1, **characterised in that** the contour of each stamped portion (12) forms a crescent-shaped arched surface.

6. Laundry drum according to claim 1, **characterised in that** the arched surface of each stamped portion (4, 11, 12) considered in a section along the axis (44) of symmetry thereof has a part (5) rising as steeply as possible relative to the drum circumference (2) and a part (10) falling flatly relative to the drum circumference (2).

7. Laundry drum according to claim 1 for a laundry treatment machine in which the laundry can be subjected to a wetting process, **characterised in that** flood holes (8) are arranged in the part (5), which rises steeply relative to the drum circumference (2), of the arched surface of each stamped portion (4, 11, 12).

8. Laundry drum according to claim 1, **characterised in that** the circumferential surface (2) has flood holes (9) between the stamped portions (4, 11, 12).

## Revendications

1. Tambour à linge (1) pour une machine de traitement de linge, qui est logé à l'intérieur d'un boîtier (G) de manière rotative autour d'un axe (A) non orienté en direction de la gravité et qui présente une enveloppe de tambour (2) courbée munie d'estampages curvilignes (4, 11, 12), de manière à ce qu'au moins un plan de coupe, situé perpendiculairement par rapport à l'axe de rotation (A), du tambour à linge(1) présente au moins approximativement une forme circulaire, **caractérisé en ce que** les estampages curvilignes (4, 11, 12) présentent un contour situé dans l'alignement de l'enveloppe du tambour (2), qui forme une surface comprenant plusieurs limites (41 à 43) courbes passant en continu l'une dans l'autre et qui présente seulement un unique axe de symétrie (44) s'étendant en direction circonférentielle de l'enveloppe du tambour (2).

2. Tambour à ligne selon la revendication 1, **caractérisé en ce que** l'estampage (4, 11, 12) est courbé vers l'intérieur par rapport à l'axe de rotation (A).

3. Tambour à ligne selon la revendication 1, **caractérisé en ce que** le contour de chaque estampage (4) forme une surface bombée en forme de goutte.

4. Tambour à ligne selon la revendication 1, **caractérisé en ce que** le contour de chaque estampage (11) forme une surface bombée en forme de coquillage.

5. Tambour à ligne selon la revendication 1, **caractérisé en ce que** le contour de chaque estampage (12) forme une surface bombée falciforme.

6. Tambour à ligne selon la revendication 1, **caractérisé en ce que** la surface bombée de chaque estampage (4,11, 12), vue dans une coupe le long de leur axe de symétrie (44), présente une partie (5) montant le plus possible en pente raide contre l'enveloppe de tambour (2) et une partie (10) descendant de manière plate contre l'enveloppe de tambour (2).

7. Tambour à ligne selon la revendication 1 pour une machine de traitement de linge, dans lequel le linge peut être soumis à un processus humide, **caractérisé en ce que** des trous d'immersion (8) sont disposés dans la partie (5) montant en pente raide contre l'enveloppe de tambour (2) de la surface bombée de chaque estampage (4, 11, 12).

8. Tambour à ligne selon la revendication 1, **caractérisé en ce que** la surface d'enveloppe (2) entre les estampages (4, 11, 12) présente des trous d'immersion (9).
